# EUROPEAN PATENT SPECIFICATION

(11) **EP 2 230 949 B1**
(45) Date of publication and mention of the grant of the patent: **29.05.2013**
(21) Application number: 08855698.0
(22) Date of filing: 26.11.2008
(51) Int. Cl.: A23N 15/02, A01D 46/28, B07B 13/04

(54) **DE-BUNCHING SYSTEM INCLUDING A DEVICE FOR LATERAL EVACUATION OF UNDESIRABLE COMPONENTS**
VOLLERNTER MIT SEITLICHER ABLEITUNG DER REBSTÖCKE
SYSTÈME D'ÉGRAPPAGE COMPRENANT UN DISPOSITIF D'ÉVACUATION LATÉRALE DES PARTIES INDÉSIRABLES

(30) Priority: 26.11.2007 FR 0708252
(43) Date of publication of application: 29.09.2010
(73) Proprietor: CNH France S.A., 91150 Morigny-Champigny (FR)
(72) Inventor: BERTHET, Jean-Paul, F-85220 La Chaize Giraud (FR); LE BRIQUER, Thierry, F-85220 Coëx (FR)
(74) Representative: CNH IP Department
(86) International application number: PCT/EP2008/066277
(87) International publication number: WO 2009/068587

(56) References cited:
- FR-A- 2 859 074
- FR-A- 2 861 952
- US-A- 2 731 051
- US-A- 4 029 005

## Description

The present invention relates to a system for de-bunching a harvested stream of fruit growing in raceme bunches and a harvesting machine including a de-bunching system of this kind.

The invention applies to the field of mechanised harvesting of fruit growing on trees or bushes, such as grapes or other small fruit growing in bunches.

Fruit is conventionally harvested by a machine including a shaker system that straddles a row of plants to detach the crop. The harvested crop stream obtained is then conveyed within the machine to be stored in at least one bin or hopper provided for this purpose or in an attached trailer.

However, because of the action of the shaker system, the harvested stream includes, in addition to detached fruit, among other things, juice, leaves, wood particles, bunches of fruit of various sizes.

The search for quality in winemaking requires separating the undesirable components from the harvested crop stream, and therefore to store only the detached grapes and the juice. "De-bunching" or "de-stemming" as used herein refers to the particular operation of removing the fruit berries from the raceme or panicle stalks in a bunch.

The document EP-1 002 467 discloses a machine adapted to gin the grape bunches before vinification. To this end, the above document teaches the rotation of an endless apron constituting a screen and, above said apron, a rake assembly driven with a relative movement for separating the berries from the stalks with an ejection effect. FR 2 859 079 discloses a similar machine, which is however not intended to be mounted on harvesting machine.

The above machine has the particular disadvantage that undesirable components detached from the grapes, in particular stalks, are evacuated from the apron in vertical alignment with the machine. Now, if the harvesting machine straddles more than one row of vines, while only shaking a single row, as is the case when the vine rows are closely spaced, this results in pollution of the row that has not been harvested.

The invention aims to improve on the prior art in particular by proposing a de-bunching system in which the undesirable components are evacuated laterally with respect to the stream.

To this end, a first aspect of the invention proposes a system for de-bunching a harvested stream of grapes in bunches, said system being intended to be mounted on board a harvesting machine, said system including an endless screen that is driveable between an upstream transverse shaft and a downstream transverse shaft, said screen including openings configured for allowing the de-bunched grapes to pass through and retaining undesirable components of the stream on said screen, said system further including a driven rotary member overlying said screen between said transverse axes, said rotary member including radial de-bunching fingers which, upon rotation, are configured to interact with the grapes stream on the screen for separating the grapes from their stalks,
characterised in that said system further includes a device for lateral evacuation of the undesirable components, said device including means for conveying said components from the exterior side of the screen adjacent the downstream transverse shaft to a lateral area of ejection of said components.

A second aspect of the invention proposes a machine for harvesting grapes in bunches including a driven carrier structure and a harvesting system mounted on said structure, said harvesting system being adapted to detach the grapes from vines, characterised in that said machine includes a de-bunching system according to the first aspect of the invention for receiving a harvested grapes stream coming from the harvesting system.

Other objects and advantages of the invention will become apparent in the course of the following description, which is given with reference to the accompanying drawings, in which:
Figure 1 is a partial longitudinal sectional view of the de-bunching system according to one embodiment of the invention;
Figure 2 is an enlarged view of the downstream area of the de-bunching system of Figure 1;

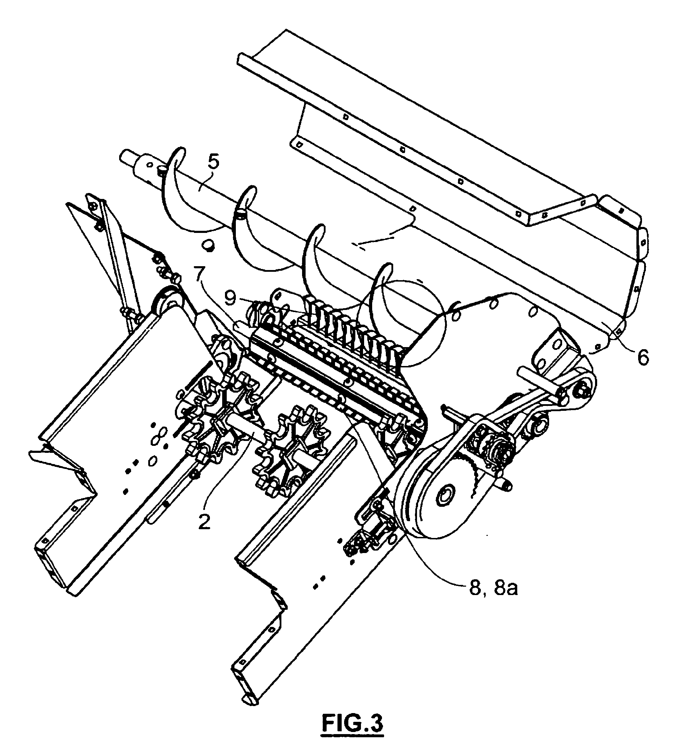

Figure 3 is an exploded view of the de-bunching system of Figure 1;
Figure 4 is a perspective view of the transfer shaft of the de-bunching system of Figure 1;
Figure 5 is a perspective view of the comb of the de-bunching system of Figure 1.

The invention concerns a machine for harvesting fruit in bunches, in particular a harvester for mechanised harvesting of grapes, particularly for subsequent vinification thereof. A grape harvester conventionally includes a motorised carrier structure and is equipped with a driver station and a harvesting system mounted on said structure.

The grape harvester is designed to straddle at least one row of vines in order, as it moves, to introduce the vine stems successively into the harvesting system, which is adapted to detach the crop. To this end, the harvesting system includes vine shakers, in particular a row of shakers provided on either side of the space into which the vine stems are introduced. The invention applies in particular to a harvesting machine in which the carrier structure is adapted to straddle more than one row of plants, as is the case in particular when the space in between the rows is small.

The grape harvester also includes a system for continuous recovery of the detached crop, which includes, in addition to detached grape berries, among other things, juice, leaves, wood particles, bunches of various sizes. In one embodiment, the system includes two bucket conveyors adapted to recover the detached crop under the introduction space and to convey said crop into the upper portion of the harvester.

In the context of the vinification of grapes, it is desirable to de-bunch the harvested grapes to eliminate stalks and therefore to store only berries and juice.

There is described hereinafter with reference to the figures an embodiment of a system for de-bunching a harvested stream of fruit in bunches that is mounted on board the machine to be fed with a harvested stream coming from the harvesting system. In particular, before feeding the de-bunching system, the machine can include devices for separating and/or sorting the harvested stream to eliminate some of the undesirable components such as leaves or wood particles.

In the following description, terms such as "upstream", "downstream", "front" and "back" are defined with reference to the normal flow of harvested product. Thus, with an inclined screen, it is possible for the "downstream" portion to be at a higher level than the "upstream" portion.

The de-bunching system includes an endless screen 1 that is driven between an upstream transverse shaft (not shown) and a downstream transverse shaft 2. The screen 1 has openings adapted to enable loose grapes to pass through and to retain on said screen undesirable components of the stream, such as stalks or fragments of stalks. The de-bunching system further includes a driven rotary member 3 overlying said screen between said transverse axes. The member 3 includes substantially radial de-bunching fingers 4 which are adapted, on rotation, to interact with the crop stream on the screen 1 in order to separate the grape berries attached to the bunches. A de-bunching system of this kind for separating grapes from stalks with an ejection effect is described for instance in the document EP-1 002 467.

The de-bunching system of the invention further includes a device for lateral evacuation of the undesirable components, said device including means for conveying said components from the exterior side of the downstream transverse shaft 2 to a lateral ejection area of said components. Thus the undesirable components are no longer evacuated in vertical alignment with the machine, but can be directed to an area without vines that are still to be harvested, in particular over or beside the row that has just been harvested.

In the embodiment shown, the conveyor means include an auger 5 rotatable about a transverse axis that is rearwardly spaced relative to the downstream transverse shaft 2. Moreover, the auger 5 is disposed in a transverse evacuation trough 6.

The lateral evacuation device can further include a transverse transfer shaft 7 that is driven in rotation, this shaft being mounted between the downstream transverse shaft 2 and the conveyor means 5, to facilitate the transfer of said components from said screen to said conveyor means. The transfer shaft 7 therefore ensures continuous cleaning of the exterior surface of the screen 1.

To this end, the shaft carried radial paddles 8 adapted to interact with the undesirable crop components on the screen 1 adjacent the downstream transverse shaft 2. In particular, the paddles 8 pass at a tangent along the exterior surface of the screen 1.

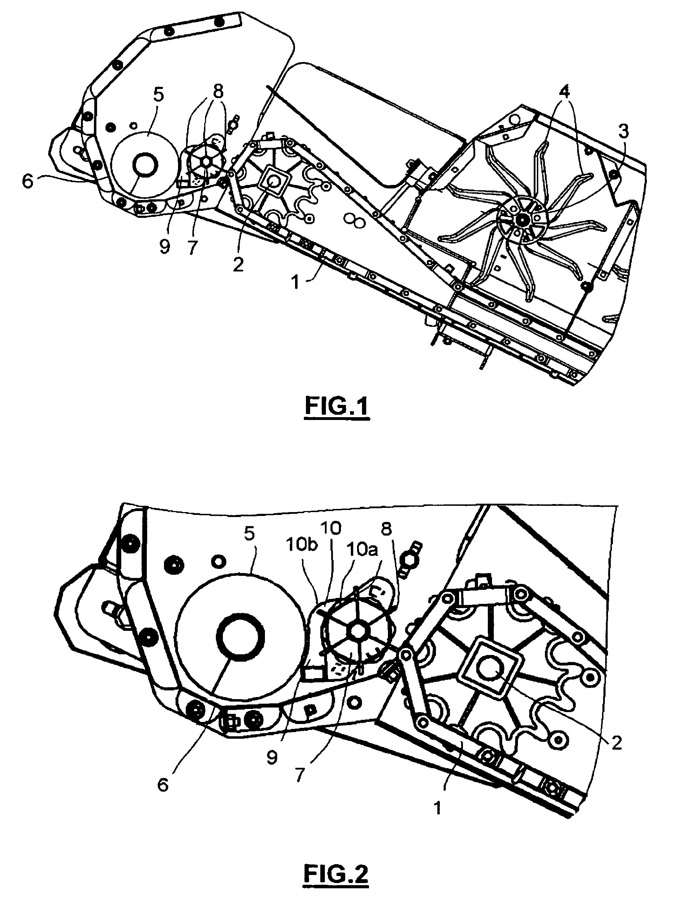

For improved transfer of the undesirable components, the transfer shaft 7 and the downstream transverse shaft 2 can be driven in the same direction (the anti-clockwise direction in Figure 1) so that the upwardly moving paddles 8 interact with the undesirable components that are moving downward to the rear of the screen 1. Moreover, as shown, the transfer shaft 7 can be disposed slightly above the conveyor means 5, so that gravity assists transfer.

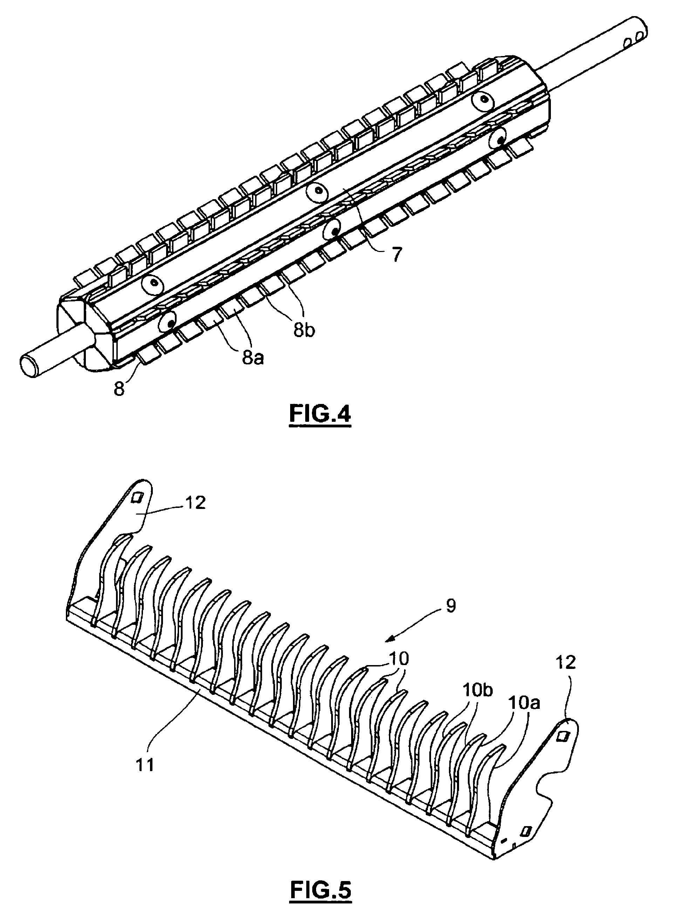

Each paddle 8 can advantageously include a transverse succession of transfer fingers 8a that are separated by a notch 8b. As shown in Figure 4 in particular, a paddle 8 is formed of a semi-rigid material bib, one side of which is associated with the shaft 7 and the other side of which has the notches providing the fingers 8a.

In this embodiment, the lateral evacuation device can further include a longitudinal comb 9 mounted between the transfer shaft 7 and the conveyor means 5, the teeth 10 of said comb being such that the transfer fingers 8a pass between said teeth. Thus the comb 9 facilitates lifting of the undesirable components on the fingers 8a to prevent pollution of the transfer shaft 7. Pollution can result in introducing undesirable components into the grape storage tank under the screen 1. Moreover, the comb 9 improves guidance of the undesirable components that are transferred from the screen 2 to the auger 5.

Referring to Figure 5, the comb 9 includes a base 11 from which the teeth 10 extend upwardly, said base further including means 12 for connection to the de-bunching system. In particular, the comb 9 can be made of metal, the teeth 10 being welded to the base 11.

In the embodiment shown, the upper end portions of the teeth 10 have a curved front face 10a with a radius of curvature similar to the radius of the transfer shaft 7, said shaft being substantially tangential to said front face. The undesirable components are therefore lifted from the fingers 8a by the upper end portions and slide along their rear face 10b, the fingers 8a then continuing their downward travel between the teeth 10 to recover further components on the screen 1.

Moreover, to improve this sliding, the rear face 10b of the upper end portion is convexly curved, said face being situated substantially in vertical alignment with the auger 5.

## Claims

1. A system for de-bunching a harvested stream of grapes in bunches, said system being intended to be mounted on board a harvesting machine, said system including an endless screen (1) that is driveable between an upstream transverse shaft and a downstream transverse shaft (2), said screen including openings configured for allowing the de-bunched grapes to pass through and retaining undesirable components of the stream on said screen, said system further including a rotary member (3) overlying said screen between said transverse axes, said rotary member including radial de-bunching fingers (4) which, upon rotation, are configured to interact with the grapes stream on the screen (1) for separating the grapes from their stalks,
**characterised in that** said system further includes a device for lateral evacuation of the undesirable components, said device including means (5) for conveying said components from the exterior side of the screen (3) adjacent the downstream transverse shaft (2) to a lateral area of ejection of said components.

2. A system for de-bunching according to claim 1, **characterised in that** the conveying means include an auger (5) rotatable about a transverse axis that is spaced toward the rear relative to the downstream transverse shaft (2), said auger being disposed in a transverse evacuation trough (6).

3. A system for de-bunching according to claim 1 or 2, **characterised in that** the lateral evacuation device further includes a rotatable transverse transfer shaft (7), said shaft being mounted between the downstream transverse shaft (2) and the conveying means (5), said shaft carrying radial paddles (8) configured to interact with the undesirable components on the screen (1) at the location of the downstream transverse shaft (2) to facilitate the transfer of said components from said screen to said conveying means.

4. A system for de-bunching according to claim 3, **characterised in that** the transfer shaft (7) and the downstream transverse shaft (2) are driven in the same direction so that the paddles (8) interact upwardly with the undesirable components that are moving downwardly on the screen (1).

5. A system for de-bunching according to claim 3 or 4, **characterised in that** the transfer shaft (7) is installed above the conveying means (5).

6. A system for de-bunching according any of the claims 3 to 5, **characterised in that** each paddle (8) includes a transverse succession of transfer fingers (8a) that are separated by notches (8b).

7. A system for de-bunching according to claim 6, **characterised in that** the lateral evacuation device further includes a longitudinal comb (9) mounted between the transfer shaft (7) and the conveying means (5), the teeth (10) of said comb being configured for passage of the transfer fingers (8a) between said teeth.

8. A system for de-bunching according to claim 7, **characterised in that** the comb (9) includes a base (11) from which the teeth (10) extend upwardly.

9. A system for de-bunching according to claim 7 or 8, **characterised in that** the upper end portion of the teeth (10) has a front face (10a) that is curved with a radius of curvature similar to the radius of the transfer shaft (7), said shaft being substantially tangential to said front face.

10. A system for de-bunching according to any of the claims 7 to 9, **characterised in that** the upper end portion of the teeth (10) has a rear face (10b) that is convexly curved.

11. A machine for harvesting grapes in bunches including a driven carrier structure and a harvesting system mounted on said structure, said harvesting system being adapted to detach the grapes from vines, **characterised in that** said machine comprises a de-bunching system according any of the claims 1 to 10 for receiving a harvested grapes stream coming from the harvesting system.

12. A machine for harvesting grapes according to claim 11 the carrier structure being configured for straddling more than one row of plants.

## Patentansprüche

1. System zum Abbeeren eines geernteten Stromes von Beeren in Trauben, wobei das System zur Befestigung an Bord einer Erntemaschine bestimmt ist, wobei das System ein endloses Sieb (1) einschließt, das zwischen einer stromaufwärts gelegenen Querwelle und einer stromabwärts gelegenen Querwelle (2) antreibbar ist, wobei das Sieb Öffnungen aufweist, die so konfiguriert sind, dass sie den Durchgang der abgebeerten Beeren ermöglichen und unerwünschte Bestandteile des Stromes auf dem Sieb zurückhalten, wobei das System weiterhin ein rotierendes Bauteil (3) einschließt, das über dem Sieb zwischen den Querachsen liegt, wobei das rotierende Bauteil radiale Abbeer-Finger (4) einschließt, die bei ihrer Drehung so konfiguriert sind, dass sie mit dem Traubenstrom auf dem Sieb (1) in Wechselwirkung treten, um die Beeren von den Stängeln zu trennen,
**dadurch gekennzeichnet, dass** das System weiterhin eine Einrichtung zum lateralen Abziehen der unerwünschten Bestandteile einschließt, wobei die Einrichtung Fördereinrichtungen (5) zum Fördern der Bestandteile von der Außenseite des Siebes (3) benachbart zu der stromabwärts gelegenen Querwelle (2) zu einem seitlichen Ausstoßbereich für die Bestandteile einschließt.

2. System zum Abbeeren nach Anspruch 1, **dadurch gekennzeichnet, dass** die Fördereinrichtungen eine Förderschnecke (5) einschließen, die um eine Querachse drehbar ist, die mit Abstand nach hinten bezogen auf die stromabwärts gelegene Querwelle (2) angeordnet ist, wobei die Förderschnecke in einer sich quer erstreckenden Abziehwanne (6) angeordnet ist.

3. System zum Abbeeren nach Anspruch 1 oder 2, **dadurch gekennzeichnet, dass** die laterale Abzieheinrichtung weiterhin eine drehbare, sich quer erstreckende Überführungswelle (7) einschließt, wobei die Welle zwischen der stromabwärts gelegenen Querwelle (2) und den Fördereinrichtungen (5) angeordnet ist, wobei die Welle radiale Schaufeln (8) trägt, die so konfiguriert sind, dass sie mit den unerwünschten Bestandteilen auf dem Sieb (1) an der Stelle der stromabwärts gelegenen Querwelle (2) in Wechselwirkung treten, um die Überführung der Bestandteile von dem Sieb auf die Fördereinrichtungen zu erleichtern.

4. System zum Abbeeren nach Anspruch 3, **dadurch gekennzeichnet, dass** die Überführungswelle (7) und die stromabwärts gelegene Querwelle (2) in der gleichen Richtung angetrieben werden, so dass die Schaufeln (8) nach oben mit den unerwünschten Bestandteilen in Wechselwirkung treten, die sich nach unten auf dem Sieb (1) bewegen.

5. System zum Abbeeren nach Anspruch 3 oder 4, **dadurch gekennzeichnet, dass** die Überführungswelle (7) oberhalb der Fördereinrichtungen (5) installiert ist.

6. System zum Abbeeren nach einem der Ansprüche 3 bis 5, **dadurch gekennzeichnet, dass** jede Schaufel (8) eine sich quer erstreckende Folge von Überführungsfingern (8a) einschließt, die durch Kerben (8b) getrennt sind.

7. System zum Abbeeren nach Anspruch 6, **dadurch gekennzeichnet, dass** die laterale Abziehvorrichtung weiterhin einen sich in Längsrichtung erstreckenden Kamm (9) einschließt, der zwischen der Überführungswelle (7) und den Fördereinrichtungen (5) befestigt ist, wobei die Zähne (10) des Kammes für den Durchgang der Überführungsfinger (8a) zwischen den Zähnen konfiguriert sind.

8. System zum Abbeeren nach Anspruch 7, **dadurch gekennzeichnet, dass** der Kamm (9) eine Basis (10) einschließt, von der aus sich die Zähne (10) nach oben erstrecken.

9. System zum Abbeeren nach Anspruch 7 oder 8, **dadurch gekennzeichnet, dass** der obere Endteil der Zähne (10) eine Vorderfläche (10a) aufweist, die mit einem Krümmungsradius ähnlich dem Radius der Überführungswelle (7) gekrümmt ist, wobei die Welle im Wesentlichen tangential zu der Vorderfläche ist.

10. System zum Abbeeren nach einem der Ansprüche 7 bis 9, **dadurch gekennzeichnet, dass** der obere Endteil der Zähne (10) eine Hinterfläche (10b) aufweist, die konvex gekrümmt ist.

11. Maschine zum Ernten von Beeren in Trauben, unter Einschluss einer angetriebenen Trägerstruktur und eines Erntesystems, das auf der Struktur befestigt ist, wobei das Erntesystem zum Trennen der Beeren von den Rebstöcken ausgebildet ist, **dadurch gekennzeichnet, dass** die Maschine ein Abbeer-System nach einem der Ansprüche 1 bis 10 zum Empfang eines geernteten Beerenstromes umfasst, der von dem Erntesystem kommt.

12. Maschine zum Ernten von Beeren nach Anspruch 11, wobei die Trägerstruktur zum Überqueren von einer oder mehreren Reihen von Pflanzen konfiguriert ist.

## Revendications

1. Système d'égrappage d'un flux de récolte de raisins en grappe, ledit système étant destiné à être embarqué dans une machine récolteuse, ledit système comprenant un tamis sans fin (1) qui est motorisé entre un axe transversal amont et un axe transversal aval (2), ledit tamis comprenant des ouvertures agencées pour permettre le passage des grains égrappés et la rétention sur ledit tamis de composants indésirables du flux, ledit système comprenant en outre un organe rotatif (3) motorisé surmontant ledit tamis entre lesdits axes transversaux, ledit organe comprenant des doigts radiaux (4) d'égrappage qui, lors de la rotation, sont agencés pour interagir avec le flux de raisins disposé sur le tamis (1) afin de provoquer la séparation de grains des rafles,
ledit système étant **caractérisé en ce qu'**il comprend en outre un dispositif d'évacuation latérale des composants indésirables, ledit dispositif comprenant un moyen de convoyage (5) desdits composants depuis la partie extérieure du tamis (1) au niveau de l'axe transversal aval (2) vers une zone latérale d'éjection desdits composants.

2. Système d'égrappage selon la revendication 1, **caractérisé en ce que** le moyen de convoyage comprend une vis sans fin (5) montée en rotation selon un axe transversal qui est espacé vers l'arrière par rapport à l'axe transversal aval (2), ladite vis sans fin étant disposée dans une goulotte transversale (6) d'évacuation.

3. Système d'égrappage selon la revendication 1 ou 2, **caractérisé en ce que** le dispositif d'évacuation latérale comprend en outre un arbre transversal (7) de transfert qui est motorisé en rotation, ledit arbre étant monté entre l'axe transversal aval (2) et le moyen de convoyage (5), ledit arbre portant des pales radiales (8) agencées pour interagir avec les composants indésirables qui sont disposés sur le tamis (1) au niveau de l'axe transversal aval (2), de sorte à favoriser le transfert desdits composants depuis ledit tamis vers ledit moyen de convoyage.

4. Système d'égrappage selon la revendication 3, **caractérisé en ce que** l'arbre de transfert (7) et l'axe transversal aval (2) sont motorisés dans le même sens pour que les pales (8) présentent une interaction ascendante sur les composants indésirables qui sont en déplacement descendant sur le tamis (1).

5. Système d'égrappage selon la revendication 3 ou 4, **caractérisé en ce que** l'arbre de transfert (7) est disposé au dessus du moyen de convoyage (5).

6. Système d'égrappage selon l'une quelconque des revendications 3 à 5, **caractérisé en ce que** chaque pale (8) comprend une succession transversale de doigts (8a) de transfert qui sont séparés par une encoche (8b).

7. Système d'égrappage selon la revendication 6, **caractérisé en ce que** le dispositif d'évacuation latérale comprend en outre un peigne longitudinal (9), ledit peigne étant monté entre l'arbre de transfert (7) et le moyen de convoyage (5), les dents (10) dudit peigne étant agencées pour que les doigts (8a) de transfert passent entre lesdites dents.

8. Système d'égrappage selon la revendication 7, **caractérisé en ce que** le peigne (9) comprend une base (11) depuis laquelle les dents (10) s'étendent vers le haut.

9. Système d'égrappage selon la revendication 7 ou 8, **caractérisé en ce que** la partie extrême supérieure des dents (10) présente une face avant (10a) qui est incurvée avec un rayon de courbure analogue au rayon de l'arbre (7), ledit arbre étant disposé sensiblement en tangence avec ladite face avant.

10. Système d'égrappage selon la revendication 9, **caractérisé en ce que** la face arrière (10b) de la partie extrême supérieure est bombée.

11. Machine récolteuse de raisins en grappe comprenant une structure porteuse motorisée et un système de récolte monté sur ladite structure, ledit système de récolte étant agencé pour détacher les raisins des vignes, **caractérisée en ce que** ladite machine comprend un système d'égrappage selon l'une quelconque des revendications 1 à 10 qui est alimenté en flux de raisins provenant de l'ensemble de récolte.

12. Machine pour la récolte de raisins selon la revendication 11, **caractérisée en ce que** la structure porteuse est agencée pour enjamber plus d'une rangée de plantations.
